# EUROPÄISCHE PATENTANMELDUNG

(11) **EP 4 123 209 A1**
(43) Veröffentlichungstag der Anmeldung: **25.01.2023**
(21) Anmeldenummer: 21187463.1
(22) Anmeldetag: 23.07.2021
(51) Int. Cl.: F16L 55/28, G01N 29/04, F16L 101/30

(54) **SEGMENT FÜR EINEN SENSORTRÄGERKÖRPER EINES MOLCHES ZUR INSPEKTION EINER ROHRLEITUNG**

(71) Anmelder: NDT Global Corporate Ltd. Ireland, Dublin 9 (IE)
(72) Erfinder: FISCHER, Maximilian, Woerth (DE)
(74) Vertreter: Global IP Europe Patentanwaltskanzlei

(57) **Zusammenfassung**

Die vorliegenden Erfindung betrifft ein Segment (16) für einen Sensorträgerkörper (14) eines Molches (10) zur Inspektion einer Rohrleitung (12), dadurch gekennzeichnet, dass das Segment (16) eine Stützstruktur (18) aufweist, auf der mindestens ein Riegel (20) mit mindestens einem Ultraschallwandler (22) angeordnet ist, wobei der mindestens eine Riegel (20) an der Stützstruktur (18) lösbar befestigt ist.

## Beschreibung

### Technisches Gebiet

Die vorliegende Erfindung betrifft ein Segment für einen Sensorträgerkörper eines Molches zur Inspektion einer Rohrleitung sowie dessen Verwendung zur Rohrleitungsinspektion.

### Hintergrund

Rohrleitungen dienen in vielen Bereichen zum Transport von Fluiden. Zur Gewährleistung eines möglichst verlustlosen Transports ist es neben einer Endprüfung der Rohrleitung nach deren Montage unabdingbar, die Rohrleitung in gewissen zeitlichen Abständen oder etwa nach Reparaturarbeiten auf Fehlstellen zu untersuchen.

Zu diesem Zweck kann die zu untersuchende Rohrleitung beispielsweise mittels Ultraschall oder Wirbelstrom zerstörungsfrei und in-situ geprüft werden. Bei einer solchen Prüfung wird etwa eine Anordnung aus Ultraschallgebern und -sensoren auf einem sogenannten Molch montiert und der Molch in die Leitung eingesetzt. Der Molch durchläuft dann die Rohrleitung und nimmt die Sensorsignale als Funktion der zurückgelegten Wegstrecke auf, wobei die Sensorsignale unmittelbar oder zu einem späteren Zeitpunkt analysiert werden können ("In-Line Inspection", ILI).

Ein solcher Molch kann eigenständig und/oder passiv durch ein die zu inspizierende Rohrleitung durchströmendes Fluid angetrieben werden. Hierzu kann der Molch beispielsweise über eine oder mehrere sogenannte Manschetten verfügen, die am Umfang des Molchs angeordnet sind und in Kontakt mit der Innenwand der Rohrleitung stehen. Mit Hilfe solcher Manschetten, die typischerweise aus einem relativ steifen, aber dennoch flexiblen Material hergestellt sind, wird der Molch in der Rohrleitung positioniert. Gleichzeitig dienen die Manschetten dazu, den Fluss des die Rohrleitung durchströmenden Fluides um den Molch herum zu regulieren bzw. diesen zu nutzen, um für einen Vortrieb des Molchs in der Rohrleitung zu sorgen.

Die für die Rohrleitungsuntersuchung zum Einsatz kommenden Ultraschallsensoren werden anhand bestimmter Parameter wie z.B. den Pipelinedurchmesser, die Pipelinewandstärke oder Medieneigenschaften ausgewählt und anschließend auf dem Molch angeordnet und ausgerichtet. Ersichtlich existiert eine Vielzahl an möglichen Parameter-Kombinationen, was einen direkten Einfluss u.a. auf die benötigten Arten der mechanischen Sensorfixierung hat. Die damit einhergehende große Anzahl an verschiedenen mechanischen Teilen verursacht einen hohen Entwicklungs- und Kostenaufwand.

Wünschenswert wäre es daher, die Komplexität zu reduzieren und den hohen Entwicklungs- und Kostenaufwand zu verringern.

### Abriss der Erfindung

Ein erster Aspekt der Erfindung betrifft ein Segment für einen aus mindestens einem Segment bestehenden Sensorträgerkörper eines Molches zur Prüfung einer Rohrleitung, wobei das Segment eine Stützstruktur aufweist, auf der mindestens ein Riegel mit mindestens einem Ultraschallwandler angeordnet ist, wobei der mindestens eine Riegel an der Stützstruktur lösbar befestigt ist.

Die Platzierung und Ausrichtung der Ultraschallwandler ist somit durch einen separaten, lösbar befestigten Riegel definiert und nicht, wie üblich, unmittelbar auf der Stützstruktur selbst. Hierdurch können etwa verschiedene Riegeltypen für verschiedene Rohrleitungswandstärken (Riegel Typ A für 5mm Wandstärke, Riegel Typ B für 10mm, etc.) vorgehalten werden, um ein schnelles Umrüsten durch Austauschen des Riegeltyps zu ermöglichen.

Besonders bevorzugt ist der mindestens eine Riegel über eine Schnittstelle an der Stützstruktur befestigt, wobei die Schnittstelle eine vordefinierte bzw. konsistente Schnittstelle sein kann. Hierdurch ist es möglich, dass eine Stützstruktur für verschiedene Riegeltypen mit dieser Schnittstelle genutzt werden kann.

Die Schnittstelle kann aus einer Passform bestehen, bei der der Riegel in einem Abschnitt eine erste Form aufweist und die Stützstruktur in einem Abschnitt eine hierzu passende zweite Form aufweist, sodass beim Anbringen des Riegels an der Stützstruktur die erste Form mit der zweiten Form zusammenpasst und einen sicheren Sitz des Riegels auf der Stützstruktur gewährleistet. Die erste Form ist bevorzugt eine Vertiefung mit geneigten Seitenwänden und einem flachen Boden. Die zweite Form ist bevorzugt eine Erhöhung mit entgegengesetzt geneigten Seitenwänden und einem flachen Dach, sodass sich die zweite Form passgenau in die erste Form einsetzen lässt, um einen festen und sicheren Halt zu gewährleisten. Verwendet man eine solche vordefinierte, konsistente Schnittstelle für mehrere Riegeltypen, so kann jeder dieser Riegeltypen auf verschiedene Stützstrukturen in verschiedenen Molchen bzw. Rohrleitungsgrößen montiert und für eine entsprechende Messaufgabe eingesetzt werden.

Bevorzug weist der mindestens eine Riegel jeweils mindestens eine Aufnahme auf, die jeweils dazu eingerichtet ist, einen Ultraschallwandler in einer definierten Ausrichtung aufzunehmen. Bevorzugt handelt es sich um Ultraschallwandler, die Ultraschall in einer durch die Geometrie des Wandlers definierte Vorzugsrichtung abgeben und aus dieser Richtung empfangen können. In diesem Fall sorgt die definierte Ausrichtung beim Einsetzen des Wandlers in den Riegel dafür, dass Ultraschall-Signale in einer bestimmten Richtung ausgestrahlt und empfangen werden können.

Der Riegel definiert somit die Ausrichtung der Ultraschallwandler, wobei die Kombination aus Riegel(n) und Stützstruktur die Ausrichtung und Verteilung der Ultraschallwandler und damit den Einsatzbereich und die Messaufgabe definiert.

Wie bereits erwähnt, verringert sich hierdurch der Aufwand für Anpassungen an eine neue Inspektionsaufgabe / - umgebung. Insbesondere ist die Stützstruktur unabhängig von der jeweiligen Messaufgabe und kann somit beibehalten bzw. muss nicht angepasst werden. Darüber hinaus wird durch die beanspruchte Erfindung die Möglichkeit geboten, verschiedene Riegeltypen miteinander zu mischen, um den Einsatzbereich zu erweitern bzw. spezielle Anwendungen überhaupt zu ermöglichen, in denen verschiedene Sensorausrichtungen genutzt werden müssen.

Bevorzugt weist der mindestens eine Riegel eine bevorzugt ebene Oberfläche mit einer Normalen auf. Dabei ist der mindestens eine Ultraschallwandler derart auf dem jeweiligen Sensorriegel angeordnet, dass der mindestens eine Ultraschallwandler ein Signal in eine von der Normalen abweichenden Richtung abstrahlen und / oder aus einer von der Normalen abweichenden Richtung empfangen kann. Alternativ oder zusätzlich hierzu kann der mindestens eine Ultraschallwandler ein Signal in einer Normalen-Richtung abstrahlen und / oder aus einer Normalen-Richtung empfangen.

Besonders bevorzugt weist der mindestens eine Sensorriegel eine jeweilige (bevorzugt ebene) Oberfläche mit einer Normalen auf und umfasst einen ersten Ultraschallwandler sowie einen zweiten Ultraschallwandler, wobei der erste Ultraschallwandler dazu eingerichtet ist, ein Signal in eine erste Richtung abzustrahlen, und der zweite Ultraschallwandler dazu eingerichtet ist, ein Signal aus einer zweiten Richtung zu empfangen, wobei die erste Richtung und die zweite Richtung in einer Ebene liegen.

Bevorzugt umfasst die Ebene, in der die erste Richtung und die zweite Richtung liegen, die Normale.

Bevorzugt ist die erste Richtung gegenüber der Normalen um einen Winkel von +a und die zweite Richtung gegenüber der Normalen um einen Winkel von -a geneigt. Bevorzugt gilt 0 ≤ a < 90° und besonders bevorzugt 0 < a < 90°.

In einer besonders bevorzugten Ausführungsform sind auf dem Sensorriegel mindestens zwei Ultraschallwandler angeordnet.

In einer ebenfalls besonders bevorzugten Ausführungsform sind auf der Stützstruktur mindestens zwei Riegel angeordnet, wobei bevorzugt jeder der Riegel mit jeweils mindestens zwei Ultraschallwandlern bestückt ist.

Ein zweiter Aspekt der vorliegenden Erfindung betrifft die Verwendung eines Segments nach dem ersten Aspekt in einem Molch zur Prüfung einer Rohrleitung.

Ein dritter Aspekt der vorliegenden Erfindung betrifft einen Molch zur Prüfung einer Rohrleitung mit mindestens einem Segment nach dem ersten Aspekt.

Das Segment kann dabei die vorstehend beschriebenen Eigenschaften und Merkmale allein oder in Kombination aufweisen.

### Kurze Beschreibung der Figuren

Nachfolgend werden beispielhafte Ausführungsformen der Erfindung anhand der folgenden Figuren beschrieben:
Figur 1 zeigt einen Molch 10 in einer zu inspizierenden Rohrleitung 12 mit einem Sensorträgerkörper 14, der mehrere Segmente 16 gemäß dem ersten Aspekt der Erfindung aufweist;
Figur 2a und Figur 2b zeigen schematische Darstellungen eines Segments gemäß dem ersten Aspekt der Erfindung;
Figur 3 zeigt eine beispielhafte Stützstruktur 18 ohne daran angebrachte Riegel 20;
Figur 4 zeigt einen mit Ultraschallwandlern 22 bestückten Riegel 20 in Explosionsdarstellung;
Figur 5 zeigt einen beispielhaften Strahlengang im Einsatz bei der Rohrleitungsprüfung;
Figur 6 zeigt ein Segment 16 mit einer Stützstruktur 18 und acht Riegeln 20;
Figur 7 zeigt ein Segment 16 im Einsatz in einer Rohrleitung 12.

### Detaillierte Beschreibung

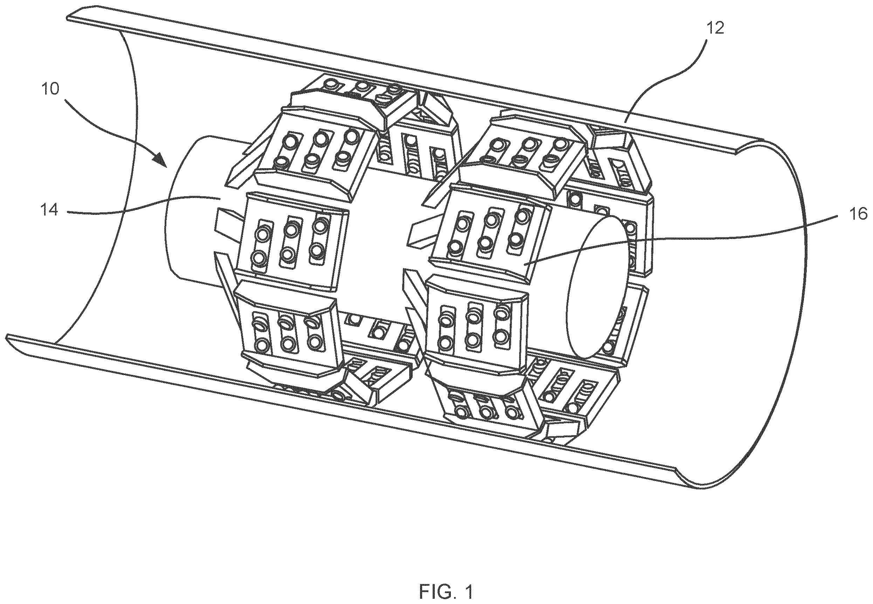

Figur 1 zeigt einen Molch 10 in einer zu inspizierenden Rohrleitung 12 mit einem Sensorträgerkörper 14, der mehrere Segmente 16 gemäß dem ersten Aspekt der Erfindung aufweist.

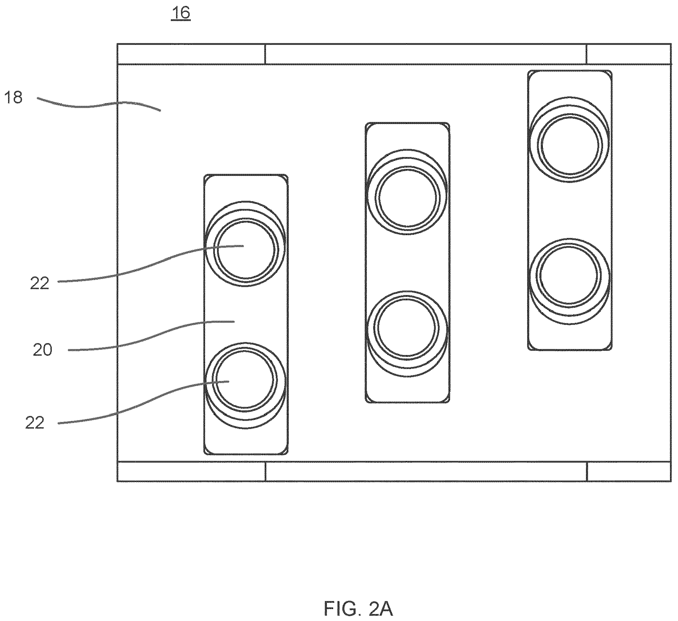

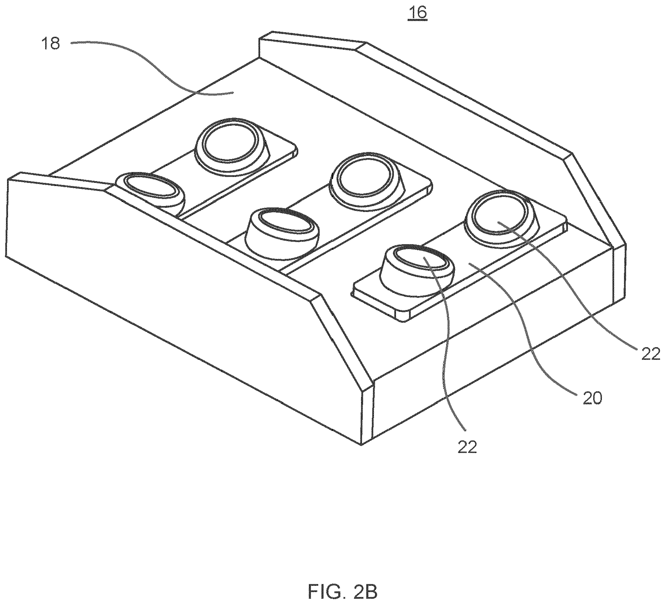

Eines der Segmente 16 ist in der Draufsicht gemäß Figur 2a schematisch dargestellt. Das Segment 16 umfasst eine Stützstruktur 18, an der drei Riegel 20 angebracht sind, wobei jeder der Riegel 20 zwei Ultraschallwandler 22 aufweist. Die beiden Ultraschallwandler 22 jedes Riegels 20 sind, wie in Fig. 2a und insbesondere Fig. 2b zu erkennen ist, zueinander geneigt, sodass ihre jeweilige Abstrahl- bzw. Empfangsrichtung von der Normalen zur Oberfläche des Riegels 20 um den gleichen Winkel mit entgegengesetzten Vorzeichen abweicht. Man erkennt, dass die Riegel 20 gegeneinander versetzt angeordnet sind. Konkret sind die Riegel 20 gegeneinander in deren Längsrichtung versetzt angeordnet, welche der Richtung entspricht, in der die beiden Ultraschallwandler 22 pro Riegel 20 angeordnet sind. Hierdurch wird im Einsatz des Segments 16 eine größere Abdeckung pro Segment 16 der zu inspizierenden Rohrleitungsinnenwand erzielt.

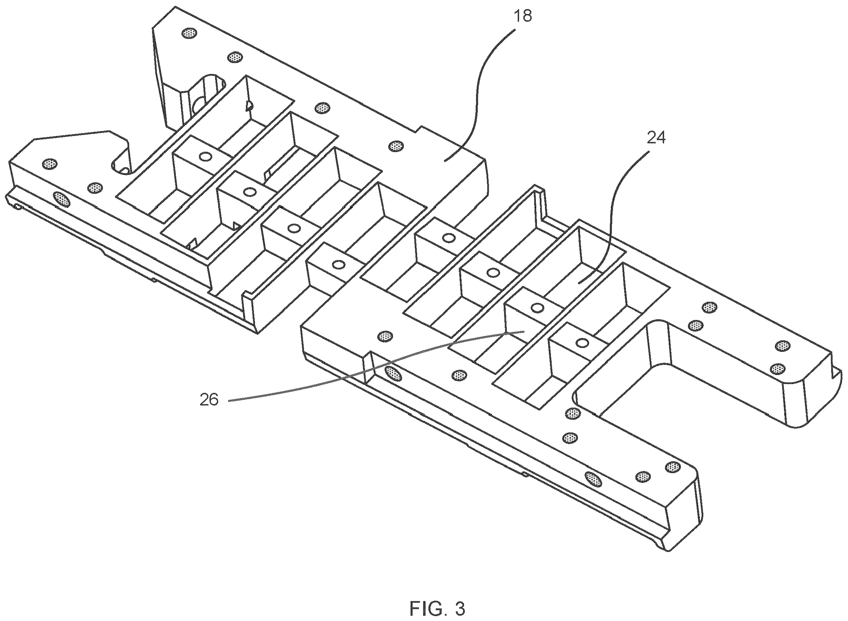

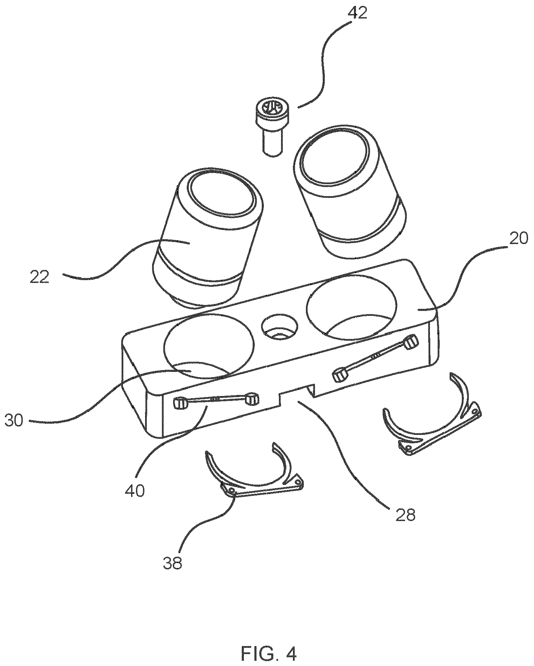

Fig. 3 zeigt eine beispielhafte Stützstruktur 18 ohne daran angebrachte Riegel 20. Die Stützstruktur 18 bildet einen mechanischen Rahmen mit in diesem Fall acht Vertiefungen bzw. Ausnehmungen 24, wobei jede der Ausnehmungen 24 dazu eingerichtet und geformt ist, einen Riegel 20 mit Ultraschallwandlern 22 aufzunehmen und zu halten. Jede der acht gezeigten Ausnehmungen 24 umfasst zu diesem Zweck ein Verbindungselement 26. Das Verbindungselement 26 weist eine Form auf, die zu einer invers geformten Schnittstelle 28 eines Riegels 20 passt (vgl. Fig. 4), sodass der Riegel 20 dadurch an der Stützstruktur 18 gesichert werden kann, dass die Schnittstelle 28 des Riegels 20 formschlüssig mit dem Verbindungselement 26 zusammenwirkt.

Ein beispielhafter Riegel 20 gemäß dem ersten Aspekt der vorliegenden Erfindung ist in der Explosionsdarstellung gemäß Fig. 4 gezeigt. Der Riegel 20 weist zwei Aufnahmen 30 auf, in die jeweils ein Ultraschallwandler 22 in einer bestimmten Ausrichtung eingesetzt werden kann. Zur Befestigung des Ultraschallwandlers 22 in einer der Aufnahmen 30 kann beispielsweise, wie in Fig. 4 angedeutet, eine Klammer 38 verwendet werden. Die Klammer 38 lässt sich in einen der Neigung gegen die Normale der Oberfläche des Riegels 20 und damit der Ausrichtung des Ultraschallwandlers 32 entsprechend ausgebildeten Schlitz 40 einführen, bis sie in eine entsprechende umlaufende Nut an dem Ultraschallwandler 22 eingreift und den Ultraschallwandler 22 damit an dem Riegel 20 sichert.

Zur lösbaren Befestigung des Riegels 20 an der Stützstruktur kann eine Schraube 42 verwendet werden. Hierzu weist der Riegel 20 eine in Richtung der Normalen der Oberfläche des Riegels 20 verlaufende, durchgehende Bohrung zwischen den beiden Aufnahmen 30 auf. Die Bohrung wird stufenweise enger, sodass die Schraube 42 in die Bohrung eingeführt und mit ihrem Kopf darin versenkt werden kann. In dem Verbindungselement 26 ist an geeigneter Stelle eine entsprechende, mit einem Gewinde versehene Bohrung vorgesehen, in die die Schraube 42 eingedreht werden kann, wie es in Figur 3 angedeutet ist.

Wie aus den Figuren ersichtlich, sind die beiden Ultraschallwandler 22 eines Riegels 20 derart zueinander geneigt, dass die Abstrahl- bzw. Empfangsrichtungen der beiden Ultraschallwandler 22 (i) von der Normalen zur Oberfläche des Riegels 20 abweichen und (ii) in einer die Normale umfassenden Ebene liegen. Besonders bevorzugt bildet die Abstrahl-/Empfangsrichtung des einen Ultraschallwandlers 22 einen von Null verschiedenen Winkel mit der Normalen, wobei die Abstrahl-/ Empfangsrichtung des anderen Ultraschallwandlers 22 den entgegengesetzten bzw. negativen Winkel mit der Normalen bildet.

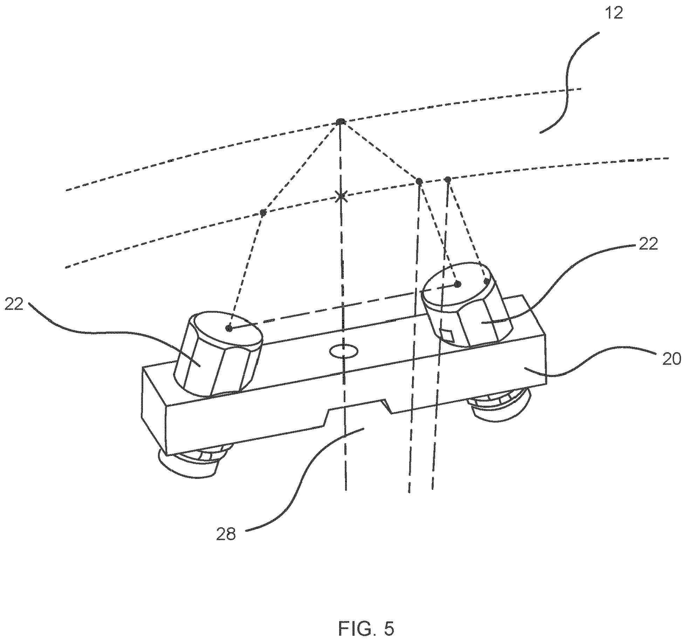

Ein von dem ersten Ultraschallwandler 22 abgestrahltes Ultraschallsignal wird somit in direkter Reflexion von einer in einem geeigneten Abstand h angeordneten Rohrleitungswand unmittelbar in Richtung des anderen, zweiten Ultraschallwandlers 22 gelenkt, wie es in Figur 5 angedeutet ist. Die beiden Ultraschallwandler 22 können jedoch auch weiter entfernt voneinander angeordnet sein, als es die direkte Reflexion von einer in einem Abstand h angeordneten Rohrleitungswand vorschreiben würde, etwa, um in der Rohrleitung sich ausbreitende Ultraschallmoden zu detektieren, die erst nach einer gewissen Wegstrecke in der Rohrleitung wieder aus dieser austreten.

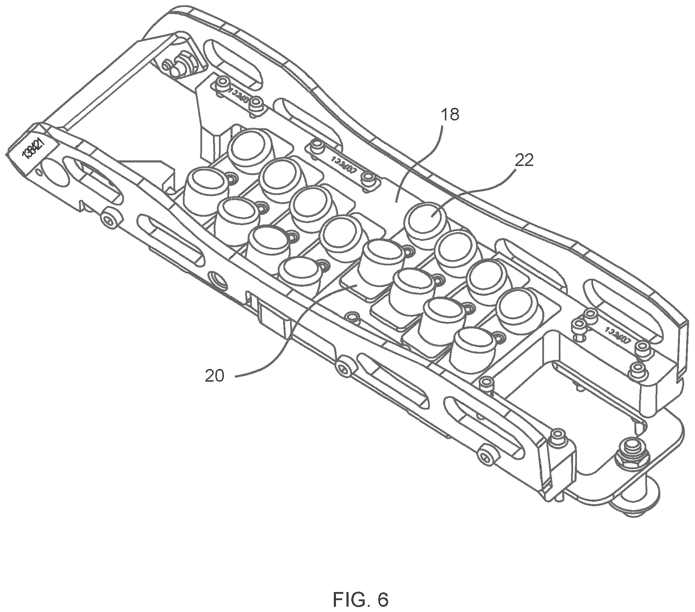

In Figur 6 ist ein Segment 16 mit einer Stützstruktur 18 und acht Riegeln 20 gezeigt. Die Riegel 20 sind jeweils mit zwei zueinander geneigten Ultraschallwandlern 22 bestückt. Die Riegel 16 sind in eine jeweilige Ausnehmung 24 eingepasst und dabei einzeln über ihre jeweilige Schnittstelle 28 formschlüssig mit dem darunter liegenden Verbindungselement 26 der jeweiligen Ausnehmung 24 der Stützstruktur 18 sicher verbunden. Zusätzlich sind die Riegel 20 mit einer jeweiligen Schraube 42, wie ebenfalls vorstehend beschrieben, an der Stützstruktur 18 lösbar befestigt.

Die Riegel 20 sind, wie in Figur 6 dargestellt, gegeneinander versetzt angeordnet, um im Einsatz bei der Rohrleitungsinspektion einen möglichst großen Bereich der Rohrleitungswand mit Ultraschallsignalen zu beschallen und untersuchen zu können. Aufgrund der vordefinierten Schnittstelle 28, die für alle Riegel 20 gleich ist, kann das Segment 16 schnell und ohne großen Aufwand mit anderen Riegeln 20 und damit anderen bzw. anders ausgerichteten Ultraschallwandlern 22 bestückt werden.

Die Stützstruktur 18 ist mittels weiterer Schrauben an dem Segment 16 befestigt, wie in Figur 6 gezeigt. Über die am rechten, unteren Rand der Figur 6 gezeigte Schraubverbindung ist das Segment 16 an dem Sensorträgerkörper 14 und damit dem Molch 10 angebracht (nicht gezeigt).

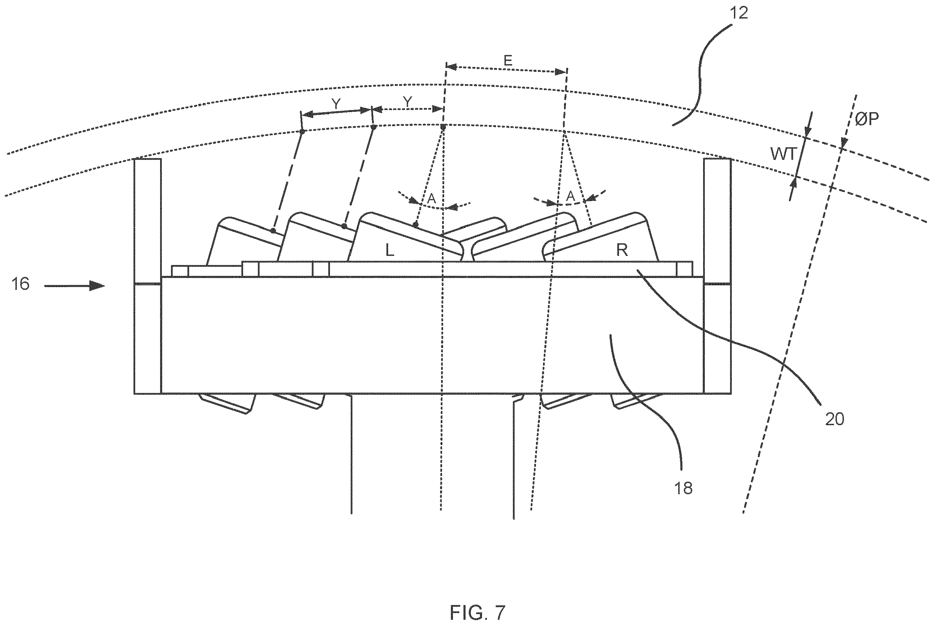

Die Beschallung und Erfassung der von der Rohrleitung 12 reflektierten Ultraschallsignale mit Hilfe eines erfindungsgemäßen Segments 16 im Einsatz bei der Inspektion einer Rohrleitung 12 ist in der Figur 7 gezeigt. Wie vorstehend beschrieben, sind auf der Stützstruktur 18 des Segments 16 mehrere Riegel 20 angebracht, die jeweils zwei zueinander geneigte Ultraschallwandler 22 - einen rechten und einen linken, daher die Bezeichnung R und L in der Fig. 7, wobei WT die Wanddicke der Rohleitung 12, ΦP den Außendurchmesser der Rohrleitung 12 und A den Neigungswinkel der Wandler 22 gegen die Normale andeuten. Hierdurch wird erreicht, dass der Abstrahl-/Empfangswinkel der beiden Ultraschallwandler 22 eines solchen Paares gleich ist (bis auf das Vorzeichen), wie in der Figur 7 angedeutet.

## Patentansprüche

1. Segment (16) für einen Sensorträgerkörper (14) eines Molches (10) zur Inspektion einer Rohrleitung (12), **dadurch gekennzeichnet, dass** das Segment (16) eine Stützstruktur (18) aufweist, auf der mindestens ein Riegel (20) mit mindestens einem Ultraschallwandler (22) angeordnet ist, wobei der mindestens eine Riegel (20) an der Stützstruktur (18) lösbar befestigt ist.

2. Segment nach einem der vorhergehenden Ansprüche, wobei der mindestens eine Riegel (20) eine vordefinierte Schnittstelle (28) aufweist, über die der Riegel (20) an der Stützstruktur (18) befestigt ist.

3. Segment nach Anspruch 2, wobei die vordefinierte Schnittstelle (28) eine Form aufweist, die derart zu einer inversen Form auf der Stützstruktur (18) passt, dass die Form der Schnittstelle (28) mit der inversen Form auf der Stützstruktur (18) zusammenwirkt, um einen sicheren Sitz des Riegels (20) auf der Stützstruktur (18) zu gewährleistet.

4. Segment nach einem der vorhergehenden Ansprüche, wobei der mindestens eine Riegel (20) jeweils mindestens eine Aufnahme (30) aufweist, die jeweils dazu eingerichtet ist, einen Ultraschallwandler (22) in einer definierten Ausrichtung aufzunehmen.

5. Segment nach einem der vorhergehenden Ansprüche, wobei der mindestens eine Riegel (20) eine jeweilige Oberfläche mit einer Normalen aufweist und der mindestens eine Ultraschallwandler (22) derart auf dem jeweiligen Riegel (20) angeordnet ist, dass der mindestens eine Ultraschallwandler (22) ein Signal in eine von der Normalen abweichenden Richtung abstrahlen und / oder aus einer von der Normalen abweichenden Richtung empfangen kann.

6. Segment nach einem der vorhergehenden Ansprüche, wobei der mindestens eine Riegel (20) eine jeweilige Oberfläche mit einer Normalen aufweist und einen ersten Ultraschallwandler (22) sowie einen zweiten Ultraschallwandler (22) umfasst, wobei der erste Ultraschallwandler (22) dazu eingerichtet ist, ein Signal in eine erste Richtung abzustrahlen, und der zweite Ultraschallwandler (22) dazu eingerichtet ist, ein Signal aus einer zweiten Richtung zu empfangen, wobei die erste Richtung und die zweite Richtung in einer Ebene liegen.

7. Segment nach Anspruch 6, wobei die Ebene die Normale umfasst.

8. Segment nach Anspruch 6 oder 7, wobei die erste Richtung gegenüber der Normalen um einen Winkel von +a und die zweite Richtung gegenüber der Normalen um einen Winkel von -a geneigt ist.

9. Segment nach einem der vorhergehenden Ansprüche, wobei auf dem Riegel (20) mindestens zwei Ultraschallwandler (22) angeordnet sind.

10. Segment nach einem der vorhergehenden Ansprüche, wobei auf der Stützstruktur (18) mindestens zwei Riegel (20) mit jeweils mindestens zwei Ultraschallwandlern (22) angeordnet sind.

11. Molch zur Inspektion einer Rohrleitung (12), welcher einen Sensorträgerkörper (14) mit mindestens einem Segment gemäß einem der vorhergehenden Ansprüche aufweist.

12. Verwendung eines Segments gemäß einem der Ansprüche 1 - 10 oder eines Molches gemäß Anspruch 11 bei der Prüfung einer Rohrleitung (12) auf Fehlstellen.
